# EUROPEAN PATENT SPECIFICATION

(11) **EP 2 870 079 B1**
(45) Date of publication and mention of the grant of the patent: **13.01.2021**
(21) Application number: 13732599.9
(22) Date of filing: 17.06.2013
(51) Int. Cl.: B65D 81/34, B65D 77/20

(54) **PLASTIC TRAY WITH PRINTABLE COVER**
KUNSTSTOFFSCHALE MIT BEDRUCKBAREM DECKEL
BARQUETTE EN MATIÈRE PLASTIQUE AVEC COUVERCLE IMPRIMABLE

(30) Priority: 27.06.2012 GB 201211384; 28.02.2013 GB 201303590
(43) Date of publication of application: 13.05.2015
(73) Proprietor: Discovery Flexibles Limited, Dundee DD4 6ET (GB)
(72) Inventor: PRITCHARD, Owen, Dundee DD4 6ET (GB)
(74) Representative: Gordon, Naoise Padhraic Edward
(86) International application number: PCT/GB2013/000265
(87) International publication number: WO 2014/001740

(56) References cited:
- EP-A1- 1 845 031
- EP-A2- 0 223 253
- WO-A1-03/026892
- WO-A1-2011/123410

## Description

### Introduction

The present invention relates to a food packaging container of the type suitable for containing foodstuff which may be heated or cooked in the container, according to the preamble of claim 1 (see for example WO 2011/123410 A1).

### Background

Supermarkets and the like sell a large amount of pre-prepared food such as ready meals, vegetable accompaniments, puddings and so on. These foodstuffs are sold to the consumer in heat resistant preformed plastic trays which can be placed directly in a conventional oven, microwave oven or the like for the purpose of heating or cooking the food.

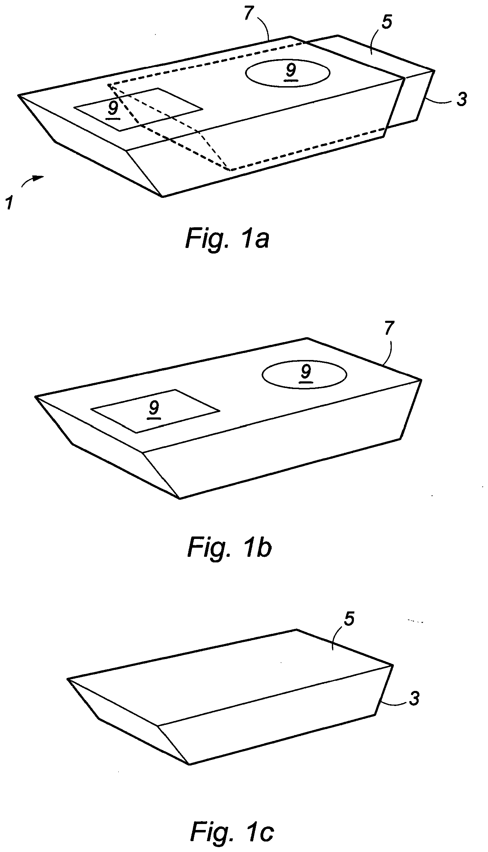

There are a number of different types of pre-formed plastic tray available in the market. Figures 1a, 1b and 1c show a typical example. The food packaging container 1 comprises a tray 3 which is made from a plastics material which is able to withstand the heat necessary to cook or heat the contents of the tray inside a conventional oven or microwave. The tray 3 has a sealed clear film lid 5 which may be similarly heat resistant. The lid 5 seals-in the contents of the tray 3 prior to use. An outer cover 7 is also provided. In this example, the outer cover 7 comprises a sleeve, in other examples the outer cover may be a cardboard box or the like.

One main purpose of the cover is to display information about the product including, the brand, type of goods, cooking instructions, legislative requirements for food safety, ingredients, nutritional information and so on. The cover must be able to meet printing requirements to truly replicate the brand and other information and colours that the vendor wishes to convey to a customer. For that reason cardboard and paper are the most frequently used media for the cover.

The use of a sleeve or box creates additional cost in terms of packaging creation and disposal after use. Therefore, it is desirable to provide an alternative food packaging container which reduces packaging costs and provides other advantages with respect to the currently used food packaging containers.

EP 1 845 031 A1 describes an improved retort pouch which has been designed to prevent the leakage of gas or liquid when the retort pouch is heated. This is achieved by creating an easily breakable part which breaks when the internal pressure increases, due to heating similar to a safety valve. Print is applied to the projecting portion 1b through to the protruding edge.

WO 03/026892 A1 describes a self-venting and self-peeling lid which slowly peels off/open as the product cooks.

EP 0 223 253 A2 discloses a packaging sheet and container with a substrate, a heat sealing layer and a metallic film layer which may receive a printed layer. The overall purpose is to make a strong, retortable package which will self vent and not burst if overheated.

WO 2011/123410 A1 relates to a resealable laminate for heat sealed packages. It describes a single layer resealable lid which uses a pressure sensitive adhesive and is peeled directly from the tray.

### Summary of the Invention

In accordance with the present invention there is provided a food packaging container as defined in claim 1.

Further embodiments of the present invention are defined in the dependent claims 2-13.

Advantageously, the presence of the separate and distinct second layer means that the invention need not use a pressure sensitive adhesive. Pressure sensitive adhesives are prone to leaving residue upon a surface when one surface is peeled from another. Heat applied to a tray with pressure sensitive adhesive residue, can cause the residue to heat and degrade into other chemicals.

Preferably, the printable layer is bonded to the second layer using heat and/or pressure such that the printable layer is fixedly bonded to the second layer.

Preferably, the second layer is bonded to the lid using heat and/or pressure.

Preferably, the second layer is a peelable polyolefin layer.

Preferably, the lid is removeably bonded to the tray using heat and/or pressure.

Preferably, the material used for the second layer and the material used for the lid are selected such that the heat applied creates a weaker bond between the second layer and the lid than between the lid and the tray. Therefore the lid can be peeled away by the consumer with ease leaving the lid bonded to the tray.

Preferably, the bond between the printable layer and the second layer is a permanent bond such that said printable layer and second layer are designed not to be separable from each other in use.

Preferably, the printable packaging film may be selected from one of the following materials oriented polypropylene (OPP), cast polypropylene (CPP), oriented polyamide (OPA), polyethylene (PE) or polyethyleneterephthalate (PET)

Preferably, the second layer comprises a clear PE (Polyethylene) which is peelable from the lid.

Preferably, the lid may be made from one of the following materials oriented polypropolene (OPP), cast polypropylene (CPP), oriented polyamide (OPA), polyethylene (PE) or polyethyleneterephthalate (PET).

Optionally, the printable layer, the second layer and the lid are bonded using suitable adhesives.

Optionally , the adhesive used between the second layer and the lid and the adhesive used between the lid and the tray are selected such that a weaker bond is created between the second layer and the lid than between the lid and the tray. Therefore the cover can be peeled away by the consumer with ease leaving the lid bonded to the tray.

Preferably, the adhesive is a clean peel adhesive.

Preferably, the adhesive is pressure sensitive.

Preferably, the adhesive is heat resistant.

Preferably, the adhesive is selectively applied across the surface of the lid and/or cover.

Preferably, the adhesive has a peel strength from about 100 g/25mm to about 1000g/25mm.

Optionally, the second layer and the lid are resealable.

Alternatively, a resealable adhesive is used to reconnect the lid and the second layer.

Advantageously this allows the contents of the container to be viewed through the transparent lid and for the printable cover to be then replaced.

Optionally, the resealable adhesive is a polyolefin adhesive.

Optionally, the resealable adhesive is a modified polyolefin adhesive.

Optionally, the resealable adhesive is a wet applied synthetic coating.

Preferably the tray is a thermoformed plastic tray.

Preferably, the lid comprises a heat resistant packaging film removeably bonded to the tray.

Preferably, the lid comprises a packaging film made from polyethyleneterephthalate (PET).

### Brief Description of the Drawings

The present invention will now be described, by way of example only, with reference to the accompanying drawings in which:
Figure 1a is a perspective view of a prior art food packaging container with the sealed food tray inside a card sleeve; Figure 1b is a perspective view of the cardboard sleeve and Figure 1c is a perspective view of the food tray;
Figure 2a is a perspective view of a first embodiment of a food packaging container in accordance with the present invention when closed, Figure 2b is a perspective view of the food packaging container as the cover is being removed and Figure 2c is an illustration of the reverse side of the cover;
Figure 3 is a cross sectional view of the cover, lid and tray along line C-'i of Figure 2a; and
Figure 4a is a perspective view of a second embodiment of a food packaging container in accordance with the present invention when closed, Figure 4b is a perspective view of the food packaging container as the cover is being removed and Figure 4c is an illustration of the reverse side of the cover;
Figure 5 is a cross sectional view of the cover, lid and tray along line C-Ci of Figure 4a;
Figure 6 is a schematic diagram of an embodiment of a process for making food packaging containers in accordance with the present invention; and
Figures 7a to 7c are schematic diagrams which illustrate some of the different shapes of the layers which may be used.

### Detailed Description of the Drawings

The present invention provides a product that removes the need for the cardboard box or sleeve in ovenable packaging and replaces it with a printable cover, removeably bonded to the lid and which is able to contain the same or similar information to that which would otherwise be put on a cardboard box or sleeve. Advantageously, the embodiments of the present invention provides a cover which is removable by peeling the cover layer off before further use of the product. The consumer would then use the product as normal.

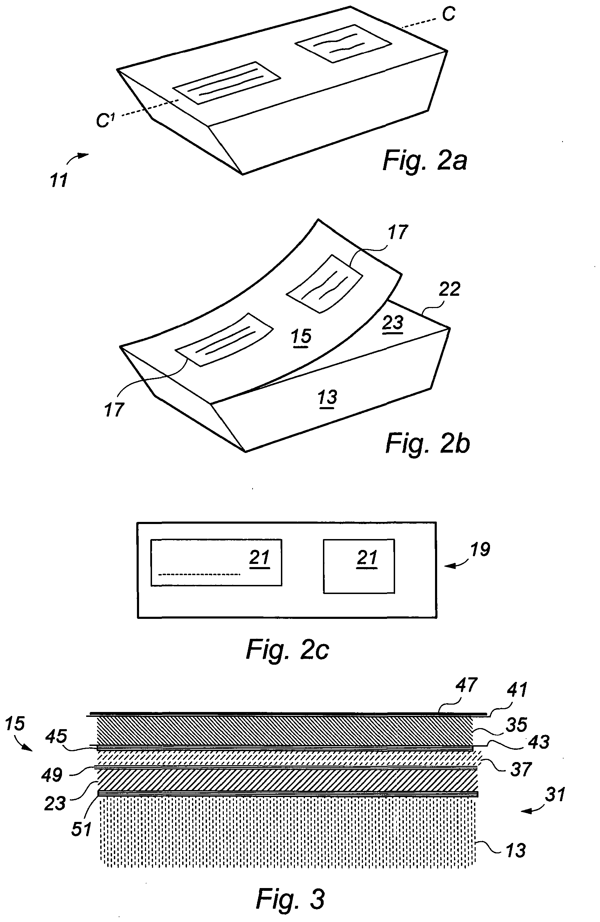

Figures 2a-c and 3 show a first embodiment of the present invention. Figure 2a shows a food packaging container 11 which comprises a tray 13, a lid 23 and a printable cover 15 which is visible to a consumer and contains printed information such as design and logos, product descriptor, basic instructions, bar coding and any legislative information and nutritional information. The cover 15 comprises a layer of filmic PET (polyester) which is 15 microns thick.

The lid 23 comprises a layer of filmic PET which is a 20 microns thick ovenable unprinted clear film. More particularly, the lid 23 is made from clear PET or a similar ovenable material and has the ability to resist a 3kg lateral stack force or other stack force required by regulations..

The food packaging container is manufactured such that no additional packaging need be used. Figure 2b shows the food packaging container of Figure 2a with the printable cover 15 having been peeled away from either along the edge 22 or at a corner of the tray 13.

Figure 2c is a schematic depiction of the reverse side 19 of the printable cover 15. The reverse side 19 of the printable cover 15 is hidden from view of the consumer when the food packaging container is fully closed as shown in Figure 2a.

The reverse side 19 presents additional printed information 21 to the consumer once the consumer has peeled back the printable cover 15. This information 21 may comprise cooking instructions, details of sales promotions and coupons or other information which is of particular relevance after the purchase.

As indicated above, the lid 23 comprises an ovenable unprinted clear film which is attached to the existing tray to give stackable resistance. The food packaging container is manufactured such that no additional packaging is required.

Figure 3 is a cross sectional view of the first embodiment of a food packing container 11 in accordance with the present invention along the line C-C'. This embodiment has three layers 31 and uses adhesive to bond the layers together.

In this example, of the present invention, the layers 31 are shown and comprise a printable cover 15 having a first printable layer 35 made from a printable grade of film such as PET or, depending on the application from numerous types of plastics films (OPP, CPP, OPA, PE as typical examples), paper or aluminium foil. According to the present invention, a clear film is printed with colours and a white backing 41 which is protected with a surface lacquer 47, then reverse printed 43 on the other side with additional information.

The second layer 37 is permanently bonded to the printable layer 35 using an adhesive 45. The second layer 37 is removeably bonded to the lid 23 using a pressure sensitive adhesive 49 which provides a semi-permanent bond, strong enough to overcome processing and handling requirements but weak enough to allow the cover 15 to be removed from the lid 23 in use. In the above example the peel strength should be range from 100 g/25mm to 1000g/25mm so as to be easily removed by the consumer prior to microwave / oven use.

The lid 23 is bonded to the tray 13 at its edges using a further adhesive 51 which is stronger than the adhesive 49 to allow the cover 15 to be removed without causing the removal of or damage to the seal between the lid 23 and the tray 13.
To keep costs to a minimum, the adhesive 51 may be manufactured using existing pressure sensitive adhesives which will be adapted for the present purpose to peel away from the inner substrate in such a manner that no significant residue will remain.

In addition, the adhesive 51 will be adapted such that all of the adhesive is removed with the cover such that when the inner pack is heated in the over / microwave, there is no adhesive 51 remaining on the lid 23 and therefore no risk of contamination to the food inside the pack.

In another example, similar to the embodiment shown in Figures 2a-c and 3, the adhesive 49 which bonds the lid to the second layer is removeably bonded to the lid 23 and this bond is resealable. This allows the option of being able to view the contents of the pack and then replace the lid 23. Re-seal technology provides a range of ways for sealing the lid to the second layer. The technology may be tailored to suit the type of product e.g. cold store and freezable packaging may use differing technologies.

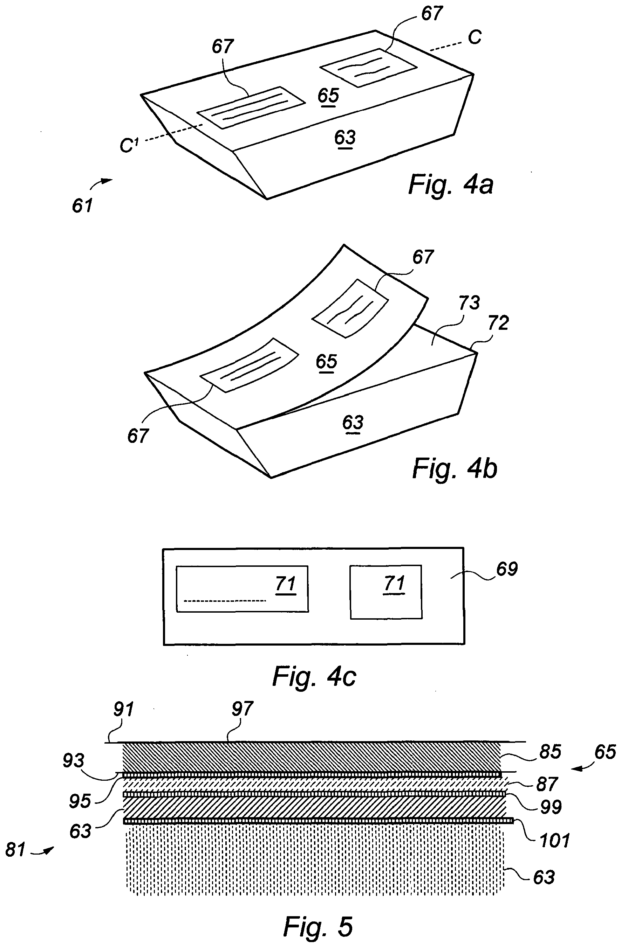

Figures 4a-c and 5 show a second embodiment of the present invention. Figure 4a shows a food packaging container 61 which comprises a tray 63 of known design and construction, a lid 73 and a printable cover 65 which is visible to a consumer and contains printed information such as design and logos, product descriptor, basic instructions, bar coding and any legislative information and nutritional information. The cover 65 comprises a layer of filmic PET (polyester) which is 15 microns thick.

The lid 73 comprises a layer of filmic PET which is a 20 microns thick ovenable unprinted clear film which is heat sealable to the existing tray 63 to give stackable resistance. More particularly, the lid 73 may be made from clear PET or a similar ovenable material which can be heat sealably bonded to the tray and have the ability to resist a 3kg lateral stack force or other stack force required by regulations.

The food packaging container 61 is manufactured such that no additional packaging need be used. Figure 2b shows the food packaging container of Figure 2a with the printable cover 65 having been peeled away from either along the edge 72 or at a corner of the tray 63.

Figure 4c is a schematic depiction of the reverse side 69 of the printable cover 65. The reverse side 69 of the printable cover 65 is hidden from view of the consumer when the food packaging container is fully closed as shown in Figure 2a.

The reverse side 69 presents additional printed information 71 to the consumer once the consumer has peeled back the printable cover 65. This information 71 may comprise cooking instructions, details of sales promotions and coupons or other information which is of particular relevance after the purchase.

As indicated above, the lid 63 comprises an ovenable unprinted clear film which is attached to the existing tray to give stackable resistance. The food packaging container is manufactured such that no additional packaging is required.

Figure 5 is a cross sectional view 81 of the second embodiment of a food packing container in accordance with the present invention along the line C-C'. This embodiment has three layers and uses heat and/or pressure to bond the layers together. The materials which are selected to comprise the printable layer 85, the second layer 87 and the lid 63 determine the strength of the bond when a predetermined amount of heat and/or pressure is applied.

In this example of the present invention, the printable layer 85 is made from a printable grade of film such as PET or, depending on the application, from numerous types of plastic films (OPP, CPP, OPA, PE as typical examples), paper or aluminium foil. According to the present invention, a clear film is printed with colours and a white backing 91 which is protected with a surface lacquer 97, then reverse printed 93 on the other side with additional information.

The second layer 87 is permanently bonded to the printable layer 85but is removeably bonded to the lid 63 with the bond being strong enough to overcome processing and handling requirements but weak enough to allow the cover 65 to be removed from the lid 73 in use. In the above example, the peel strength should range from about 100 g/25mm to about 1000g/25mm so as to be easily removed by the consumer prior to microwave / oven use.

The lid 73 is heat bonded to the tray 63 at its edges, the bond being stronger than the bond 99 to allow the cover 65 to be removed without causing the removal of or damage to the seal between the lid 73 and the tray 63.

In use, the cover 65 can be peeled from the lid 73 to reveal the print 71 on its reverse side 69. Thereafter, the lid 73 may be removed from the tray 63, either prior to heating or afterwards.

In other embodiments of the present invention, the bond between the printable layer 85 and the second layer 87 may be a heat bond and/or an adhesive bond. Similarly, the bond between the second layer 87and the lid 73 may be a heat bond and/or an adhesive bond and the bond between the lid 73 and the tray 63 may be a heat bond and/or an adhesive bond.

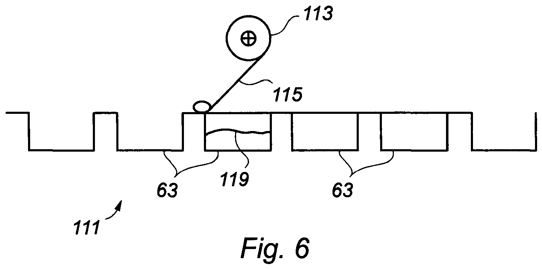

In another example, similar to the embodiment shown in Figures 5a-c and 6, the adhesive which bonds the lid 73 to the second layer 87 is removeably bonded to the lid 73 and this bond is resealable. This allows the option of being able to view the contents of the pack and then replace the lid 73. Re-seal technology provides a range of ways for sealing the lid to the second layer 87. The technology may be tailored to suit the type of product e.g. cold store and freezable packaging may use differing technologies.

Figure 6 is a schematic example of packaging machinery 111 used to create a packaging container as illustrated in the second embodiment above. Trays 63 are thermoformed and filled with food 119 in a known manner. The combined cover and lid 115 are laminated, fed down from a reel 113 and heat sealed to a tray 63. In this heating process, the lid 73 forms a bond to the tray 63. This can be permanent or peelable depending on the film used and customer requirements. The second layer 87 is heat sealed to the lid 73. At this stage of processing the customer runs the product through their machine and as the heat is applied and the lid cut/stamped out of the web fed reel the heat and pressure applied in the packing machine stick the lid 73 to the preformed tray 63. In this process the heat and pressure from the application method employed by the machine would pass through the various layers and would result in the lid 73 being heat sealed to the tray as normal and the second layer 87 also being heat sealed to the lid 73 at the same time.

As indicated above, the printable layer is permanently bonded to the second layer 87. The bond caused by heating between the second layer 87 and the lid 73 is not permanent. The materials used for the second layer 87 and for the lid 73 are selected such that the heat applied creates a weaker bond between the second layer 87 and the lid 73 than between the lid 73 and the tray 63. Therefore the lid 73 can be peeled away by the consumer with ease leaving the lid 73 bonded to the tray 63. In the third embodiment of the invention described above, the peelable film is permanently bonded using a suitable lamination adhesive to the print web. This part of the structure will be removed prior to microwave or oven use.

In order to create an efficient manufacturing process, it is preferable to attach the laminate cover to the lid film prior to packing the product.

The films can simply be wound together with no bonding agent but it is envisaged that during final packing, the lack of bond between the films could lead to tension control problems. In order to overcome this, the peelable film in the third and other embodiments of the present invention will have "tack" to provide sufficient bond (<50 g/25mm) to the lid material (typically PET) so that tension can be controlled effectively during final packing. This will be achieved by blending suitable polymers together (typically polyolefin based polymers) in order to achieve the required tack and also to retain the peelable seal for the consumer to remove the lid prior to microwave / oven use.

Advantageously, this embodiment of the present invention does not require a pressure sensitive adhesive between the cover and the lid as is required in other embodiments of the present invention as there is no risk of residue of the pressure sensitive adhesive being left on the PET base layer and subsequently heated with the tray and lid.

In another embodiment of the present invention, the second layer 87 extends around the perimeter of the tray 63 between the printable layer 85 and the lid 73. This provides a smaller bonding area between them whilst allowing a substantially permanent bond between the printable layer 85 and the second layer 87 and a removeable bond between the second layer 87 and the lid 73. The second layer 87 may have other suitable shapes.

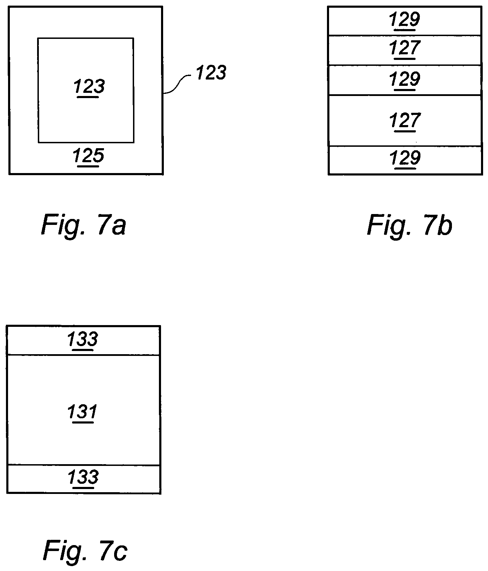

Figures 7a to 7c are schematic diagrams which illustrate some of the different shapes of the layers which may be used with the printable layers 123, 127 and 131 at the rear and the second layers 125, 129 and 133 to the front.

In the case of a frozen ready meal market, packaging usually comprises a plastic tray, sealed lid made from clear film with a cardboard sleeve or box as the outer packaging where cardboard boxes and sleeves are added manually. The present invention reduces packaging waste, packaging cost and improves packaging line efficiency when compared to known packaging such as that described in Figure 1.

The present invention also reduces the packaging weight saving costs on transportation etc and gives an estimated cost and weight reduction (excluding the tray) of around 50%.

As described above, the cover may be made from a printable grade of film. The printable grade film may comprise a variety of materials such as types of plastics film materials oriented polypropylene (OPP), cast polypropylene (CPP), oriented polyamide (OPA), polyethylene (PE) or polyethyleneterephthalate (PET) paper or aluminium foil.

Furthermore, in order to reduce cost and pack weight, the adhesive could be pattern applied to the perimeter of the lid.

Improvements and modifications may be incorporated herein without deviating from the scope of the present invention as defined in the appended claims.

## Claims

1. A food packaging container (11, 61) for containing foodstuff which may be heated or cooked in the container (11, 61), the container (11, 61) comprising:
a tray (13,63) for containing food;
a lid (23,73) for sealing the tray (13,63); and
a printable cover (15,65), **characterised in that**, the printable cover comprises a first printable layer (35,85) bonded to a second layer (37,87) which is removeably bonded to the lid (23,73) the second layer (37,87) comprises a transparent packaging film and the first layer comprises a printable packaging film (35, 85), wherein:
the printable packaging film (35,85) contains information printed on an outer surface, said print being viewable on the outer surface of the printable film (17, 67), and printed on an inner surface,
said print being viewable on an inner surface (19,69) of the packaging through the transparent packaging film (37, 87), wherein the printable packaging film (35, 85) is printed on the outer side with colours and a white blanking (41, 91) protected by a surface lacquer (47, 97), then reverse printed (43) on the inner side with additional information.

2. A food packaging container (61) as claimed in claim 1 wherein the printable layer (85) is bonded to the second layer (87) using heat and/or pressure such that the printable layer (85) is fixedly bonded to the second layer.

3. A food packaging container (61) as claimed in claim 1 or claim 2 wherein the second layer (87) is bonded to the lid using heat and/or pressure.

4. A food packaging container (61) as claimed in any preceding claim wherein the lid (73) is removeably bonded to the tray using heat and/or pressure.

5. A food packaging container (61) as claimed in any preceding claim wherein the material used for the second layer (87) and the material used for the lid (73) are selected such that the heat applied creates a weaker bond between the second layer (87) and the lid (73) than between the lid (73) and the tray (63) which allows the second layer (87) to be peelable with ease from the lid (73) leaving the lid (73) bonded to the tray.

6. A food packaging container (11,61) as claimed in any preceding claim wherein the bond between the printable layer (35,85) and the second layer (37,87) is a permanent bond such that said printable layer (35,85) and second layer (37,87) are not separable from each other in use.

7. A food packaging container (11,61) as claimed in any preceding claim wherein the printable cover may be selected from one of the following materials: oriented polypropylene (OPP), cast polypropylene (CPP), oriented polyamide (OPA), polyethylene (PE) or polyethyleneterephthalate (PET).

8. A food packaging container (11,61) as claimed in claim 1 wherein the second layer (37,87) comprises a clear PE (Polyethylene) film which is peelable from the lid (23,73).

9. A food packaging container (11,61) as claimed in any preceding claim wherein the lid (23,73) is made from one of the following materials: oriented polypropylene (OPP), cast polypropylene (CPP), oriented polyamide (OPA), polyethylene (PE) or polyethyleneterephthalate (PET).

10. A food packaging container (11) as claimed in claim 1 wherein the first printable layer (35) is bonded to the second layer (37) using a suitable adhesive.

11. A food packaging container (11) as claimed in any preceding claim wherein the second layer (37) is bonded to the lid (23) using a suitable adhesive.

12. A food packaging container (11) as claimed in claim 10 and claim 11 wherein the adhesive used between the second layer (37) and the lid (23) and the adhesive used between the lid (23) and the tray (13) are selected such that a weaker bond is created between the second layer (37) and the lid (23) than between the lid (23) and the tray (13)) which allows the second layer (37) to be peelable with ease from the lid (23) leaving the lid (23) bonded to the tray.

13. A food packaging container (11,61) as claimed in any preceding claim wherein the bond between the second layer (37,87) and the lid (23,73) is resealable.

## Patentansprüche

1. Lebensmittelverpackungsbehälter (11, 61) zur Aufnahme von Nahrungsmitteln, die in dem Behälter (11, 61) erhitzt oder gekocht werden können, wobei der Behälter (11, 61) Folgendes umfasst:
eine Schale (13, 63) zur Aufnahme von Lebensmitteln;
einen Deckel (23, 73) zum Verschließen der Schale (13, 63); und
eine bedruckbare Abdeckung (15, 65), **dadurch gekennzeichnet, dass** die bedruckbare Abdeckung eine erste bedruckbare Schicht (35, 85) umfasst, die an eine zweite Schicht (37, 87) gebunden ist, welche entfernbar an den Deckel (23, 73) gebunden ist, wobei die zweite Schicht (37, 87) eine transparente Verpackungsfolie umfasst und die erste Schicht eine bedruckbare Verpackungsfolie (35, 85) umfasst, wobei:
die bedruckbare Verpackungsfolie (35, 85) Informationen enthält, die auf eine Außenfläche gedruckt sind, wobei der Druck auf der Außenfläche der bedruckbaren Folie (17, 67) sichtbar und auf eine Innenfläche gedruckt ist, wobei der Druck auf einer Innenfläche (19, 69) der Verpackung durch die transparente Verpackungsfolie (37, 87) sichtbar ist, wobei die bedruckbare Verpackungsfolie (35, 85) auf der Außenseite mit Farben und einer weißen Stanze (41, 91) bedruckt ist, welche durch einen Oberflächenlack (47, 97) geschützt ist, dann auf der Innenseite mit zusätzlichen Informationen rückseitig bedruckt (43) ist.

2. Lebensmittelverpackungsbehälter (61) nach Anspruch 1, wobei die bedruckbare Schicht (85) unter Verwendung von Wärme und/oder Druck an die zweite Schicht (87) gebunden wird, sodass die bedruckbare Schicht (85) fest an die zweite Schicht gebunden ist.

3. Lebensmittelverpackungsbehälter (61) nach Anspruch 1 oder Anspruch 2, wobei die zweite Schicht (87) unter Verwendung von Wärme und/oder Druck an den Deckel gebunden wird.

4. Lebensmittelverpackungsbehälter (61) nach einem der vorhergehenden Ansprüche, wobei der Deckel (73) unter Verwendung von Wärme und/oder Druck entfernbar an die Schale gebunden wird.

5. Lebensmittelverpackungsbehälter (61) nach einem der vorhergehenden Ansprüche, wobei das für die zweite Schicht (87) verwendete Material und das für den Deckel (73) verwendete Material so ausgewählt sind, dass die aufgebrachte Wärme eine schwächere Bindung zwischen der zweiten Schicht (87) und dem Deckel (73) erzeugt als zwischen dem Deckel (73) und der Schale (63), was ermöglicht, dass die zweite Schicht (87) von dem Deckel (73) leicht abgezogen werden kann, wobei der Deckel (73) an die Schale gebunden bleibt.

6. Lebensmittelverpackungsbehälter (11, 61) nach einem der vorhergehenden Ansprüche, wobei die Bindung zwischen der bedruckbaren Schicht (35, 85) und der zweiten Schicht (37, 87) eine dauerhafte Bindung ist, sodass die bedruckbare Schicht (35, 85) und die zweite Schicht (37, 87) im Einsatz nicht voneinander trennbar sind.

7. Lebensmittelverpackungsbehälter (11, 61) nach einem der vorhergehenden Ansprüche, wobei die bedruckbare Abdeckung aus einem der folgenden Materialien ausgewählt werden kann: orientiertem Polypropylen (OPP), gegossenem Polypropylen (CPP), orientiertem Polyamid (OPA), Polyethylen (PE) oder Polyethylenterephthalat (PET).

8. Lebensmittelverpackungsbehälter (11, 61) nach Anspruch 1, wobei die zweite Schicht (37, 87) einen klaren PE(Polyethylen)-Film umfasst, der von dem Deckel (23, 73) abgezogen werden kann.

9. Lebensmittelverpackungsbehälter (11, 61) nach einem der vorhergehenden Ansprüche, wobei der Deckel (23, 73) aus einem der folgenden Materialien hergestellt ist: orientiertem Polypropylen (OPP), gegossenem Polypropylen (CPP), orientiertem Polyamid (OPA), Polyethylen (PE) oder Polyethylenterephthalat (PET).

10. Lebensmittelverpackungsbehälter (11) nach Anspruch 1, wobei die erste bedruckbare Schicht (35) unter Verwendung eines geeigneten Klebstoffs an die zweite Schicht (37) gebunden wird.

11. Lebensmittelverpackungsbehälter (11) nach einem der vorhergehenden Ansprüche, wobei die zweite Schicht (37) unter Verwendung eines geeigneten Klebstoffs an den Deckel (23) gebunden wird.

12. Lebensmittelverpackungsbehälter (11) nach Anspruch 10 und Anspruch 11, wobei der zwischen der zweiten Schicht (37) und dem Deckel (23) verwendete Klebstoff und der zwischen dem Deckel (23) und der Schale (13) verwendete Klebstoff so ausgewählt sind, dass eine schwächere Bindung zwischen der zweiten Schicht (37) und dem Deckel (23) erzeugt wird als zwischen dem Deckel (23) und der Schale (13), was ermöglicht, dass die zweite Schicht (37) von dem Deckel (23) leicht abgezogen werden kann, wobei der Deckel (23) an die Schale gebunden bleibt.

13. Lebensmittelverpackungsbehälter (11, 61) nach einem der vorhergehenden Ansprüche, wobei die Bindung zwischen der zweiten Schicht (37, 87) und dem Deckel (23, 73) wiederverschließbar ist.

## Revendications

1. Un récipient d'emballage alimentaire (11, 61) destiné à contenir des denrées alimentaires qui peuvent être chauffées ou cuites dans le récipient (11, 61), le récipient (11, 61) comprenant :
un plateau (13, 63) pour contenir des aliments ;
un couvercle (23, 73) pour sceller le plateau (13, 63) ; et
une couverture imprimable (15, 65), **caractérisé en ce que** la couverture imprimable comprend une première couche imprimable (35, 85) collée à une deuxième couche (37, 87) qui est collée de manière amovible au couvercle (23, 73), la deuxième couche (37, 87) comprend un film d'emballage transparent et la première couche comprend un film d'emballage imprimable (35, 85), dans lequel :
le film d'emballage imprimable (35, 85) contient des informations imprimées sur une surface extérieure, ladite impression étant visible sur la surface extérieure du film imprimable (17, 67), et imprimées sur une surface intérieure, ladite impression étant visible sur une surface intérieure (19, 69) de l'emballage à travers le film d'emballage transparent (37, 87), dans lequel le film d'emballage imprimable (35, 85) est imprimé sur la face extérieure avec des couleurs et un masquage blanc (41, 91) protégé par une laque superficielle (47, 97), puis imprimé à l'envers (43) sur la face intérieure avec des informations supplémentaires.

2. Un récipient d'emballage alimentaire (61) tel que revendiqué dans la revendication 1 dans lequel la couche imprimable (85) est collée à la deuxième couche (87) en utilisant la chaleur et/ou la pression de telle sorte que la couche imprimable (85) est collée de manière fixe à la deuxième couche.

3. Un récipient d'emballage alimentaire (61) tel que revendiqué dans la revendication 1 ou la revendication 2 dans lequel la deuxième couche (87) est collée au couvercle en utilisant la chaleur et/ou la pression.

4. Un récipient d'emballage alimentaire (61) tel que revendiqué dans n'importe quelle revendication précédente dans lequel le couvercle (73) est collé de manière amovible au plateau en utilisant la chaleur et/ou la pression.

5. Un récipient d'emballage alimentaire (61) tel que revendiqué dans n'importe quelle revendication précédente dans lequel le matériau utilisé pour la deuxième couche (87) et le matériau utilisé pour le couvercle (73) sont choisis de telle sorte que la chaleur appliquée crée une liaison plus faible entre la deuxième couche (87) et le couvercle (73) qu'entre le couvercle (73) et le plateau (63), ce qui permet à la deuxième couche (87) d'être facilement pelable du couvercle (73), laissant le couvercle (73) collé au plateau.

6. Un récipient d'emballage alimentaire (11, 61) tel que revendiqué dans n'importe quelle revendication précédente dans lequel la liaison entre la couche imprimable (35, 85) et la deuxième couche (37, 87) est une liaison permanente de telle sorte que lesdites couche imprimable (35, 85) et deuxième couche (37, 87) ne sont pas séparables l'une de l'autre lors de l'utilisation.

7. Un récipient d'emballage alimentaire (11, 61) tel que revendiqué dans n'importe quelle revendication précédente dans lequel le couvercle imprimable peut être choisi parmi l'un des matériaux suivants : polypropylène orienté (OPP), polypropylène coulé (CPP), polyamide orienté (OPA), polyéthylène (PE) ou polyéthylène téréphtalate (PET).

8. Un récipient d'emballage alimentaire (11, 61) tel que revendiqué dans la revendication 1 dans lequel la deuxième couche (37, 87) comprend un film transparent en PE (polyéthylène) qui est pelable du couvercle (23, 73).

9. Un récipient d'emballage alimentaire (11, 61) tel que revendiqué dans n'importe quelle revendication précédente dans lequel le couvercle (23, 73) est constitué de l'un des matériaux suivants : polypropylène orienté (OPP), polypropylène coulé (CPP), polyamide orienté (OPA), polyéthylène (PE) ou polyéthylène téréphtalate (PET).

10. Un récipient d'emballage alimentaire (11) tel que revendiqué dans la revendication 1 dans lequel la première couche imprimable (35) est collée à la deuxième couche (37) en utilisant un adhésif approprié.

11. Un récipient d'emballage alimentaire (11) tel que revendiqué dans n'importe quelle revendication précédente dans lequel la deuxième couche (37) est collée au couvercle (23) en utilisant un adhésif approprié.

12. Un récipient d'emballage alimentaire (11) tel que revendiqué dans la revendication 10 et la revendication 11 dans lequel l'adhésif utilisé entre la deuxième couche (37) et le couvercle (23) et l'adhésif utilisé entre le couvercle (23) et le plateau (13) sont choisis de telle sorte qu'une liaison plus faible est créée entre la deuxième couche (37) et le couvercle (23) qu'entre le couvercle (23) et le plateau (13), ce qui permet à la deuxième couche (37) d'être facilement pelable du couvercle (23), laissant le couvercle (23) collé au plateau.

13. Un récipient d'emballage alimentaire (11, 61) tel que revendiqué dans n'importe quelle revendication précédente dans lequel la liaison entre la deuxième couche (37, 87) et le couvercle (23, 73) est refermable.
